# EUROPÄISCHE PATENTSCHRIFT

(11) **EP 4 524 542 B1**
(45) Veröffentlichungstag und Bekanntmachung des Hinweises auf die Patenterteilung: **22.04.2026**
(21) Anmeldenummer: 24198079.6
(22) Anmeldetag: 03.09.2024
(51) Int. Cl.: G01M 5/00, F16L 55/26, G01N 29/22, G03B 17/56, G03B 37/00

(54) **POSITIONIERUNGSSYSTEM FÜR KANALINSPEKTIONS- UND/ODER WARTUNGSSYSTEME**
POSITIONING SYSTEM FOR CHANNEL INSPECTION AND/OR MAINTENANCE SYSTEMS
SYSTÈME DE POSITIONNEMENT POUR SYSTÈMES D'INSPECTION ET/OU DE MAINTENANCE DE CANAL

(30) Priorität: 13.09.2023 DE 102023124733
(43) Veröffentlichungstag der Anmeldung: 19.03.2025
(73) Patentinhaber: iPEK International GmbH, 87477 Sulzberg (DE)
(72) Erfinder: Tolsdorf, Vreni, 87439 Kempten (DE); Wiese, Johannes, 87509 Immenstadt (DE); Schweizer, Simon, 87435 Kempten (DE); Krämer, Anton, 87437 Kempten (DE)
(74) Vertreter: 2s-ip Schramm Schneider Bertagnoll Patent- und Rechtsanwälte Part mbB

(56) Entgegenhaltungen:
- CN-U- 212 255 120
- DE-A1- 10 029 764
- US-A- 4 773 815
- US-A1- 2016 334 693
- US-A1- 2022 356 695

## Beschreibung

### Gebiet der Erfindung

Die Erfindung betrifft ein Kanalinspektions- und/oder Wartungssystem mit einem Fahrwagen und einem Positionierungssystem. Das Positionierungssystem ist zum Positionieren von Geräten in einem Kanal ausgestaltet.

### Hintergrund der Erfindung

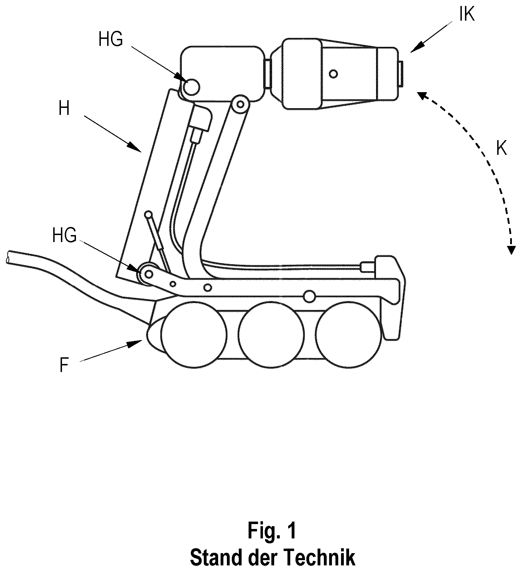

Kanalinspektionssysteme mit einem Fahrwagen und einem daran angeordneten Positionierungssystem sind aus dem Stand der Technik bekannt, beispielsweise aus der EP 2 689 227 A1. **Fig. 1** zeigt das aus der EP 2 689 227 A1 bekannte System. Das System besteht aus einem Fahrwagen F und einem daran angeordneten Heber H. Der Heber H weist mehrere Gelenke HG auf. An dem freien Ende des Hebers H ist hier eine Inspektionskamera IK angeordnet. Mittels pneumatischer Stellmittel kann der Heber H angehoben oder abgesenkt werden, sodass die am Heber befestigte Kamera ebenfalls angehoben oder abgesenkt wird. Nachteilig hierbei ist allerdings, dass die Kamera nur angehoben oder abgesenkt werden kann, was die Möglichkeiten einer Kanalinspektion erheblich einschränkt. Ferner ist es nachteilig, dass die Kamera nicht exakt senkrecht angehoben bzw. abgesenkt werden kann, sondern beim Anheben bzw. Absenken eine Kurve beschreibt, wie in Fig. 1 anhand der Bogens K angedeutet ist. Das kann dazu führen, dass sich der Abstand von der Kamera zu einer zu inspizierenden Fläche verändert, was ein Nachjustieren des Fokus der Kamera erforderlich machen kann.

Aus der DE 100 29 764 A1 ist ein Fahrwagen mit einem Wagenkern und mindestens vier Rädern bekannt, wobei an dem Wagenkern ein Kameraarm und/oder ein Arbeitsarm befestigbar sind. Der Wagenkern weist zwei miteinander verbundene Längsteile auf, die eine Öffnung umschließen und die an ihrer der Öffnung zugewandten Seite mindestens über einen Teil ihrer Länge mindestens zwei parallel zueinander verlaufende Nuten in Form eines oberen Nutenpaares und eines unteren Nutenpaares aufweisen. Der Kameraarm bzw. ein Arbeitsarm sind mittels einer Befestigungseinrichtung an dem Fahrwagen befestigbar.

Aus der US 4,773,815 ist ein automatischer Manipulator bekannt, der in der Lage ist, verschiedene Programme und adaptiv gesteuerte Vorgänge auszuführen. Es sind automatische Werkzeugwechselvorrichtungen vorgesehen, mit denen der Manipulator Werkzeuge auf seine Werkzeughalterung wechselt. Die zu verwendenden Werkzeuge werden auf einem Gestell neben dem Manipulator gehalten. Der Manipulator weist einen beweglichen Arm auf, der in Höhe verstellbar ist und dessen freien Ende die Werkzeuge aufgenommen werden.

Aus der US 2016/0334693 A1 ist eine als Glenkarm ausgestealtete Kamerahalterung zum Befestigen einer Kamera bekannt. offenbarte Kamerahalterung umfasst eine Basis, einen oder mehrere Arme und einen Kopf, die beweglich miteinander verbunden sind. Die Kamerahalterung ist realtiv zur Basis drehbar.

Aus der CN 212255120 U ist ein Brückeninspektionsroboter bekannt, der ein Fahrgestell und einen am Fahrgestellt befestigten Hebearm aufweist. Am freien Ende des Hebearms ist ein Werkzeug angeordnet. Der Hebearm ist um eine Drehachse relativ zum Fahrgestellt drehbar.

Aus der US 2022/0356695 A1 ist ein Kanalinspektionssystem bekannt, das einen Fahrwagen und einen Hebearm umfasst. Der Hebearm ist an einer Basis angeordnet, wobei die Basis an dem Fahrwagen befestigt ist. Am freien Ende des Hebearms ist eine Kamera angeordnet.

### Aufgabe der Erfindung

Aufgabe der vorliegenden Erfindung ist es daher, Lösungen bereitzustellen, die die Möglichkeiten einer Kanalinspektion und/oder Kanalwartung erweitern.

### Erfindungsgemäße Lösung

Gelöst wird diese Aufgabe mit einem Kanalinspektions- und/oder Wartungssystem mit einem Positionierungssystem gemäß dem unabhängigen Anspruch. Vorteilhafte Ausgestaltungen der Erfindung sind in den abhängigen Ansprüchen angegeben.

Bereit gestellt wird demnach ein Kanalinspektions- und/oder Wartungssystem aufweisend einen Fahrwagen und ein Positionierungssystem zum Positionieren von Geräten in einem Kanal, wobei
- das Positionierungssystem einen Hebearm aufweist, der an einem Grundträger angeordnet ist,
- der Grundträger an dem Fahrwagen angeordnet ist,
- der Hebearm über eine Schwenkachse relativ zum Grundträger schwenkbar ist, und
- der Grundträger entlang einer Bewegungsachse relativ zum Fahrwagen bewegbar oder verfahrbar ist, wobei die wobei die Bewegungsachse parallel zur Längsachse des Fahrwagens verläuft, und
- dem Grundträger ein erstes steuerbares Stellmittel zugeordnet ist, das angepasst ist den Grundträger entlang der Bewegungsachse relativ zum Fahrwagen zu bewegen oder zu verfahren.

Der Grundträger kann um eine Drehachse relativ zum Fahrwagen drehbar sein.

Vorteilhaft ist es, wenn an dem freien Ende des Hebearms eine Aufnahmeeinheit angeordnet ist, zur Aufnahme, insbesondere lösbaren Aufnahme, des Gerätes.

Der Hebearm kann mindestens zwei Hebearmabschnitte aufweisen, die gelenkig, vorzugsweise über ein Drehgelenk, miteinander gekoppelt sind, wobei das freie Ende eines der beiden Hebearmabschnitte auslenkbar oder schwenkbar an dem Grundträger angeordnet ist.

Vorteilhaft kann es sein, wenn
- dem Grundträger ein erstes steuerbares Stellmittel zugeordnet ist, das angepasst ist,
   - den Hebearm über die Schwenkachse relativ zum Grundträger zu schwenken, und/oder
   - den Grundträger um die Drehachse relativ zum Fahrwagen zu drehen, und/oder
einem der beiden Hebearmabschnitte ein zweites steuerbares Stellmittel zugeordnet ist, das angepasst ist, den einen Hebearmabschnitt relativ zu dem anderen Hebearmabschnitte zu bewegen.

Dem ersten steuerbaren Stellmittel und/oder dem zweiten steuerbaren Stellmittel kann ein Absolutwertgeber zugeordnet sein. Referenzfahrten des Positionierungssystem können so vermieden werden.

Vorteilhaft kann es sein, wenn die Aufnahmeeinheit über einen vorbestimmten Winkelbereich, vorzugsweise über einen Winkelbereich von 180°, besonders bevorzugt über einen Winkelbereich von 270°, relativ zum Hebearm schwenkbar ist. Damit wird dem Positionierungssystem ein weiterer Freiheitsgrad hinzugefügt.

Die Aufnahmeeinheit kann
- drehbar an dem freien Ende des Hebearms angeordnet sein, und/oder
- zweiteilig ausgestaltet sein, wobei ein erster Teil der Aufnahmeeinheit relativ zum zweiten Teil der Aufnahmeeinheit drehbar ist.

In einer Ausgestaltung der Erfindung kann im Hebearm zumindest ein druckdichter Kanal ausgebildet sein.

Der druckdichte Kanal kann von dem einen Ende bis an das andere Ende des Hebearms als durchgängiger druckdichter Kanal ausgebildet sein, der fahrwagenseitig mit dem Fahrwagen gekoppelt ist.

Der druckdichte Kanal kann Anschlussmittel aufweisen, um ihm ein Fluid (Gas oder Flüssigkeit) zuzuführen, insbesondere unter Hochdruck zuzuführen.

Zur Stabilisierung des Geräts kann vorgesehen sein, dass
- das Gerät mittelbar über einen Gimbal an dem freien Ende des Hebearms anordenbar ist, und/oder
- Positionierungssystem derart bewegbar ist, dass die Bewegungen des Positionierungssystems der Funktion eines Gimbals entsprechen.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein aus dem Stand der Technik bekanntes Kanalinspektionssystem mit einem daran angeordneten Heber;
- Fig. 2: ein Positionierungssystem nach einem ersten Aspekt der Erfindung, ausserhalb des Schutzumfanges der Ansprüche;

- Fig. 3: ein erfindungsgemäßes Positionierungssystem nach einem zweiten Aspekt der Erfindung;
- Fig. 4: ein erstes Anwendungsbeispiel eines erfindungsgemäßen Positionierungssystems;
- Fig. 5: ein zweites Anwendungsbeispiel eines erfindungsgemäßen Positionierungssystems; und
- Fig. 6: ein Ausführungsbeispiel einer Aufnahmeeinheit eines erfindungsgemäßen Positionierungssystems.

### Detaillierte Beschreibung der Erfindung

Das erfindungsgemäß Positionierungssystem ermöglicht es in vorteilhafter Weise die Möglichkeiten einer Kanalinspektion und/oder Kanalwartung erheblich zu erweitern und darüber hinaus Kanalinspektionen und/oder Kanalwartungen zu vereinfachen. Im Unterschied zu aus dem Stand der Technik bekannten Positionierungssystemen, etwa Hebern, wie sie aus der EP 2 689 227 A1 bekannt sind und die lediglich angehoben oder abgesenkt werden können, weist das erfindungsgemäße Positionierungssystem deutlich mehr Freiheitsgrade auf, wodurch der Kopf des Positionierungssystems (d.h. das freie Ende des Positionierungssystems, an dem ein Gerät, etwa eine Kamera, befestigt ist) nahezu beliebig im Kanal positioniert werden kann.

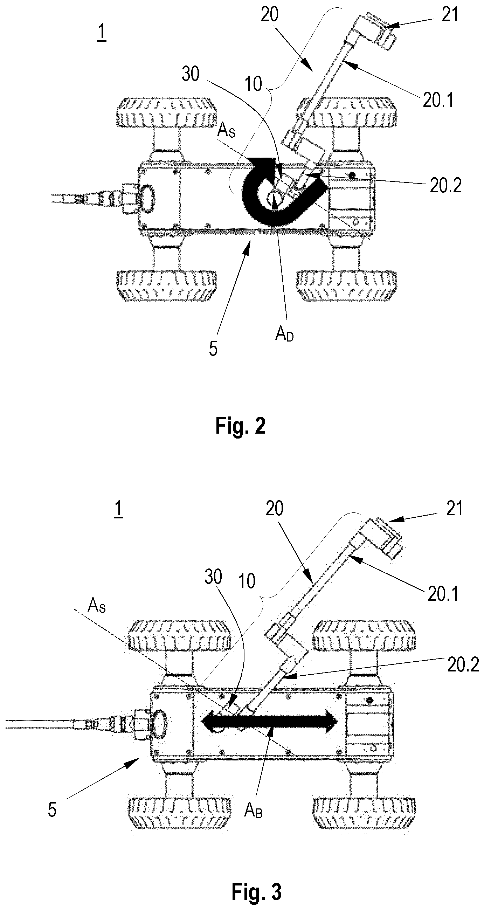

**Fig. 2** zeigt ein erfindungsgemäßes Positionierungssystem nach einem ersten Aspekt der Erfindung, ausserhalb des Schutzumfanges der Ansprüche.

An einem Fahrwagen 5, der in einem Kanal verfahrbar oder verschiebbar ist, ist ein Positionierungssystem 10 vorgesehen, der im Wesentlichen einen Hebearm 20 aufweist. Der Hebearm 20 kann aus mehreren Hebearmabschnitten 20.1, 20.2 bestehen, wobei auch mehr als zwei Hebearmabschnitte vorgesehen sein können. An dem freien Ende des Hebearms 20 kann ein eine Aufnahmeeinheit bzw. Geräteträger 21 angeordnet sein, zur Aufnahme, insbesondere lösbaren Aufnahme, eines Gerätes G. Das Gerät G kann ein Werkzeug, eine Kamera, Sensoren oder dergleichen umfassen.

Der Hebearm 20 ist an einem Grundträger 30 angeordnet. Der Grundträger 30 wiederum ist an dem Fahrwagen 5 angeordnet bzw. anordenbar. Vorteilhaft kann es sein, wenn der Grundträger lösbar an dem Fahrwagen angeordnet ist. Dadurch kann der Hebearm 20 bei Bedarf ausgetauscht werden, oder wenn er nicht benötigt wird, abgenommen werden.

Der Hebearm 20 ist an den Grundträger 30 angelenkt, vorzugsweise derart, dass er über eine Schwenkachse A_{S} relativ zum Grundträger 30 schwenkbar ist. Damit kann der Hebearm angehoben oder abgesenkt werden.

Der Grundträger 30 ist um eine Drehachse A_{D} relativ zum Fahrwagen 5 drehbar, vorzugsweise in beide Richtungen. Vorzugsweise ist der Grundträger 30 über einem Winkel von mindestens 90°, besonders bevorzugt über einen Winkel von 180°, ganz besonders bevorzugt über einen Winkel von 360° um eine Drehachse A_{D} drehbar. Ist an dem Hebearm 20 beispielsweise eine Kamera als Gerät G befestigt, kann damit bei einer entsprechenden Dimensionierung und Ausrichtung des Hebearms 20 bzw. der Hebearmabschnitte 20.1, 20.2 eine Rundumsicht bzw. eine 360°-Aufnahme realisiert werden, ohne dass die Kamera selbst relativ zum Hebearm bewegt werden muss. Gemäß einem weiteren Anwendungsbeispiel kann beispielsweise die Kamera senkrecht zur Rohrwandung hin ausgerichtet.

**Fig. 3** zeigt ein erfindungsgemäßes Positionierungssystem nach einem zweiten Aspekt der Erfindung.

An einem Fahrwagen 5, der in einem Kanal verfahrbar oder verschiebbar ist, ist ein Positionierungssystem 10 vorgesehen, der im Wesentlichen einen Hebearm 20 aufweist. Der Hebearm 20 kann aus mehreren Hebearmabschnitten 20.1, 20.2 bestehen, wobei auch mehr als zwei Hebearmabschnitte vorgesehen sein können. An dem freien Ende des Hebearms 20 kann ein eine Aufnahmeeinheit bzw. Geräteträger 21 angeordnet sein, zur Aufnahme, insbesondere lösbaren Aufnahme, eines Gerätes G. Das Gerät G kann ein Werkzeug, eine Kamera, Sensoren oder dergleichen umfassen.

Der Hebearm 20 ist an einem Grundträger 30 angeordnet. Der Grundträger 30 wiederum ist an dem Fahrwagen 5 angeordnet bzw. anordenbar. Vorteilhaft kann es sein, wenn der Grundträger lösbar an dem Fahrwagen angeordnet ist. Dadurch kann der Hebearm 20 bei Bedarf ausgetauscht werden, oder wenn er nicht benötigt wird, abgenommen werden.

Der Hebearm 20 ist an den Grundträger 30 angelenkt, vorzugsweise derart, dass er über eine Schwenkachse A_{S} relativ zum Grundträger 30 schwenkbar ist. Damit kann der Hebearm angehoben oder abgesenkt werden.

Der Grundträger 30 ist entlang eine Bewegungsachse A_{B} relativ zum Fahrwagen bewegbar. Das bedeutet, dass der Grundträger 30 entlang dieser Bewegungsachse A_{B} verschoben bzw. bewegt werden kann. Die Bewegungsachse A_{B} ist parallel zur Längsachse des Fahrwagens, d.h. der Grundträger 30 kann auf dem Fahrwagen 5 nach vorne oder nach hinten verfahren bzw. verschoben werden.

Hierfür können an dem Fahrwagen 5, vorzugsweise an der Oberseite des Fahrwagens, Führungsmittel vorgesehen werden (in Fig. 3 nicht gezeigt), die den Grundträger aufnehmen und in denen der Grundträger 30 geführt wird. Für das Bewegen des Grundträgers entlang der Führungsmittel können Stellmittel vorgesehen sein, etwa Stellmotoren. Die Führungsmittel und Stellmittel können alternativ auch mittels Linearachsen mit Spindelantrieb realisiert werden. Grundsätzlich können alle Führungsmittel und Stellmittel verwendet werden, sofern sie geeignet sind, den Grundträger 30 entlang einer Bewegungsachse A_{B} zu bewegen.

Gemäß einem weiteren Aspekt der Erfindung können die in den Fig. 2 und Fig. 3 gezeigten Ausgestaltungen kombiniert werden. An dem Fahrwagen 5 ist dann ein Grundträger 30 angeordnet, der relativ zum Grundträger entlang einer Bewegungsachse A_{B} bewegbar ist (wie mit Bezug auf Fig. 3 beschrieben), wobei der Grundträger 30 um eine Drehachse A_{D} relativ zum Fahrwagen 5 drehbar ist (wie mit Bezug auf Fig. 2 beschrieben).

Bei den beiden in Fig. 2 und Fig. 3 gezeigten Ausgestaltungen der Erfindung weist der Hebearm 20 zwei Hebearmabschnitte 20.1, 20.2. Es können aber auch mehr als zwei Hebearmabschnitte vorgesehen sein. Jeweils zwei Hebearmabschnitte sind gelenkig miteinander gekoppelt, sodass der eine Hebearmabschnitt relativ zum anderen Hebearmabschnitt bewegt werden. Zum Bewegen der einzelnen Hebearmabschnitt können diesen jeweils geeignete Stellmittel zugeordnet sein.

Entsprechende Stellmittel können auch dem Grundträger zugeordnet sein, um den Grundträger um die Drehachse A_{D} zu drehen. Ein Stellmittel des Grundträger kann auch vorgesehen sein, um den Hebearm relativ zum Grundträger auszulenken (um die Schwenkachse A_{S}).

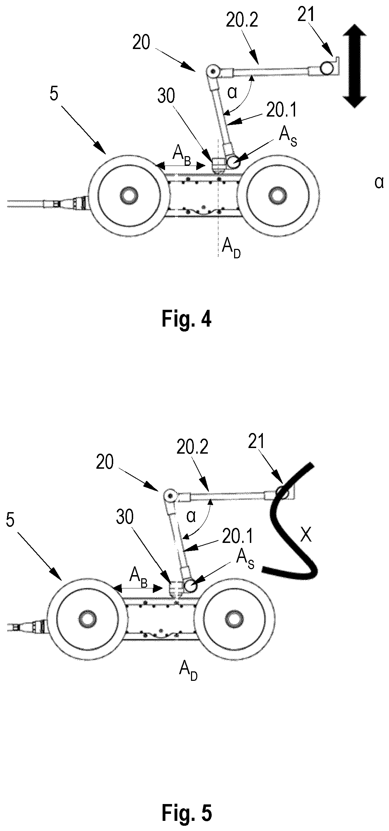

**Fig. 4** zeigt ein erstes Anwendungsbeispiel eines erfindungsgemäßen Positionierungssystems.

An dem Fahrwagen 5 ist ein erfindungsgemäßes Positionierungssystem 10 angeordnet, wie vorstehend beschrieben. Das Positionierungssystem 10 weist hier einen Hebearm 20 auf, der aus zwei Hebearmabschnitte 20.1 und 20.2 besteht. Die Hebearmabschnitte sind gelenkig miteinander verbunden, sodass der Winkel α zwischen den beiden Hebearmabschnitten veränderbar ist. Um die Schwenkachse A_{S} kann der Hebearm 20 ausgelenkt werden, um das freie Ende des Hebearms bzw. eine an dem freien Ende angeordnete Aufnahmeeinheit 21 anzuheben bzw. abzusenken. Um die Ausrichtung der Aufnahmeeinheit 21 während des Anhebens bzw. Absenkens beizubehalten, wird der Winkel α zwischen den beiden Hebearmabschnitten 20.1 und 20.2 fortlaufend so angepasst, dass beim Schwenken des ersten Hebearmabschnittes 20.1 relativ zum Grundträger 30 der zweite Hebearmabschnittes 20.2 stets horizontal ausgerichtet bleibt. Ohne zusätzliche Maßnahmen beschreibt die Aufnahmeeinheit 21 beim Anheben / Absenken eine Kurve, wie mit Bezug auf Fig. 1 zum Stand der Technik erläutert.

Erfindungsgemäß kann nun aber der Grundträger 30 während des Anhebens bzw. Absenkens der Aufnahmeeinheit 21 entlang der der Bewegungsachse A_{B} relativ zum Fahrwagen nach vorne bzw. nach hinten verfahren werden. Dadurch kann erreicht werden, dass die Aufnahmeeinheit 21 beim Anheben bzw. Absenken geradlinig bzw. lotrecht bewegt wird, wie durch den in Fig. 4 gezeigten Doppelpfeil angedeutet. Insbesondere wird dadurch vermieden, dass der Fahrwagen selbst bewegt werden muss, um diese geradlinige bzw. lotrechte Bewegung der Aufnahmeeinheit zu erreichen. Denn insbesondere auf unebenen oder verschmutzten Untergrund kann es während der Fahrt zu Erschütterungen kommen, die sich negativ auf die Inspektion oder Wartung auswirken können.

**Fig. 5** zeigt ein zweites Anwendungsbeispiel eines erfindungsgemäßen Positionierungssystems.

An dem Fahrwagen 5 ist ein erfindungsgemäßes Positionierungssystem 10 angeordnet, wie vorstehend mit Bezug auf Fig. 2 und Fig. 3 beschrieben. Das Positionierungssystem 10 weist hier einen Hebearm 20 auf, der aus zwei Hebearmabschnitte 20.1 und 20.2 besteht. Die Hebearmabschnitte sind gelenkig miteinander verbunden. Um die Schwenkachse A_{S} kann der Hebearm 20 ausgelenkt werden, um das freie Ende des Hebearms bzw. eine an dem freien Ende angeordnete Aufnahmeeinheit 21 anzuheben bzw. abzusenken.

Erfindungsgemäß ist es vorgesehen, dass die beiden Hebearmabschnitte 20.1 und 20.2 relativ zueinander bewegbar sind und der Hebearm als solches relativ zum Grundträger 30 geschwenkt (anheben / absenken) werden kann. Ferner kann der Grundträger 30 um die Drehachse A_{D} gedreht und entlang der Bewegungsachse A_{B} bewegt werden. Bei dieser Konfiguration kann das Positionierungssystem 10 so bewegt werden, dass das freie Ende des Hebearms in alle drei Dimensionen frei bewegt werden kann, wie in Fig. 5 durch Bewegungspfad X veranschaulicht.

Das Positionierungssystem 10 kann einen druckdichten Kanal aufweisen, der von dem Grundträger 30 bis zum freien Ende bzw. bis zur Aufnahmeeinheit 21 verläuft. Fahrwagenseitig kann der druckdichte Kanal mit dem Fahrwagen 5 bzw. mit einer Beaufschlagungseinrichtung des Fahrwagens gekoppelt sein. Die Beaufschlagungseinrichtung kann angepasst sein den druckdichten Kanal mit einem Fluid (Gas oder Flüssigkeit) zu beaufschlagen bzw. dem druckdichten Kanal ein Fluid (Gas oder Flüssigkeit) zuzuführen. Durch den druckdichten Kanal wird das Fluid bis an die Aufnahmeeinheit 21 gebracht. An der Aufnahmeeinheit 21 kann mittels entsprechend ausgestalteter Anschlussmittel eine Spüldüse angeordnet werden, der das Fluid (gegebenenfalls unter Hochdruck) zugeführt werden kann.

Mit dem erfindungsgemäßen Positionierungssystem 10 und einer an der Aufnahmeeinheit 21 angeordneten Spüldüse kann beispielsweise ein Hochdruck-Wasserstrahl bereitgestellt werden, der gezielt auf eine bestimmte Stelle im Kanal gerichtet werden kann oder gezielt entlang eines Pfades bewegt werden kann. Im Unterschied zu herkömmlichen Spülvorrichtungen, die mehrere Wasserstrahlen unspezifisch in mehrere Richtungen abgeben, kann so ein Reinigungsvorgang einerseits erheblich schneller durchgeführt werden (er wird nur das gereinigt, was gereinigt werden muss), andererseits wird für den Reinigungsvorgang erheblich weniger Wasser benötigt (da für nicht zu reinigende Kanalabschnitte kein Wasser benötigt wird).

Anstelle von Wasser kann der Spüldüse auch Luft über den druckdichten Kanal zugeführt werden.

Der druckdichte Kanal oder ein weiterer druckdichter Kanal kann alternativ auch vorgesehen sein, um elektrische Leitungen bis an die Aufnahmeeinheit 21 oder bis an Stellmittel des Positionierungssystem 10 zu führen.

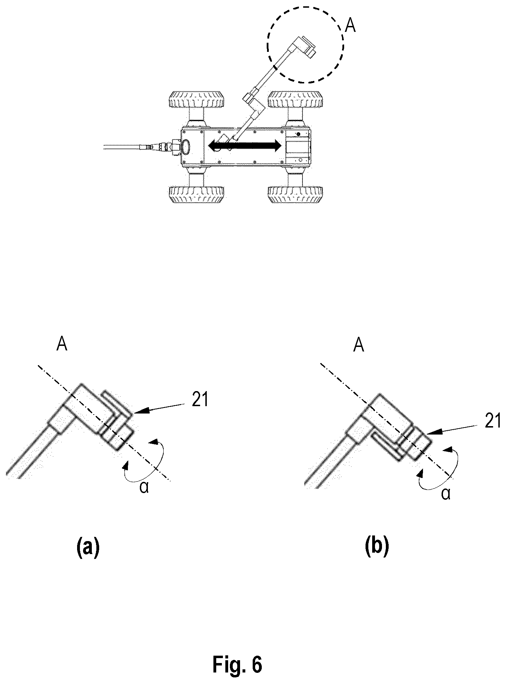

**Fig. 6** zeigt ein Ausführungsbeispiel einer Aufnahmeeinheit 21 eines erfindungsgemäßen Positionierungssystems.

An dem vorderen bzw. freien Ende des Hebearms 20 ist eine Aufnahmeeinheit 21 zur Aufnahme, insbesondere lösbaren Aufnahme eines Gerätes G angeordnet. Die Aufnahmeeinheit 21 ist über einen vorbestimmten Winkelbereich α, vorzugsweise über einen Winkelbereich von 180°, besonders bevorzugt über einen Winkelbereich von 270°, relativ zum Hebearm 20 bzw. relativ zum Hebearmabschnitt 20.2 schwenkbar ist. Damit kann beispielsweise eine an der Aufnahmeeinheit 21 angeordnete Kamera um 180° geschwenkt werden. Ein und dieselbe Kamera kann sowohl für Fahrten vorwärts als auch für Fahrten rückwärts verwendet werden. Abbildung (a) zeigt eine Aufnahmeeinheit 21, die nach vorne ausgerichtet ist, Abbildung (b) zeigt eine Aufnahmeeinheit 21, die um 180° geschwenkt ist und demnach nach hinten ausgerichtet ist.

In einem weiteren Aspekt der Erfindung kann es vorteilhaft sein, ein an dem freien Ende des Hebearms 20 oder ein an der Aufnahmeeinheit 21 angeordnetes Gerät zu stabilisieren. Hierfür kann das Gerät mittelbar über einen Gimbal an dem freien Ende des Hebearms bzw. an der Aufnahmeeinheit 21 angeordnet werden. Alternativ kann auch das Positionierungssystem, insbesondere der Hebearm, derart bewegbar sein, dass die Bewegung des Positionierungssystems der Funktion eines Gimbals entspricht bzw. das Positionierungssystem die Funktion eines Gimbals übernimmt.

### Bezugszeichen der Erfindung

- 1: Kanalinspektions- und/oder Wartungssystem
- 5: Fahrwagen
- 10: Positionierungssystem
- 20: Hebearm
- 20.1, 20.2: Hebearmabschnitte des Hebearms 20
- 21: Aufnahmeeinheit bzw. Geräteträger am freien Ende des Hebearms 20
- 30: Grundträger
- A_{B}: Bewegungsachse
- A_{D}: Drehachse
- A_{S}: Schwenkachse
- G: Geräte (z.B. Kamera, Sensoren, Werkzeuge)
- K: Kanal
- X: Bewegungspfad
- α: Schwenkwinkel der Aufnahmeeinheit 21 relativ zum Hebearm 20 bzw. Winkel α zwischen den beiden Hebearmabschnitten 20.1, 20.2

### Bezugszeichen zum Stand der Technik

- F: Fahrwagen
- H: Heber
- HG: Gelenke des Hebers
- IK: Inspektionskamera
- K: Kurve bzw. Bewegungskurve

## Patentansprüche

1. Kanalinspektions- und/oder Wartungssystem (1) aufweisend einen Fahrwagen (5) und ein Positionierungssystem (10) zum Positionieren von Geräten (G) in einem Kanal (K), wobei
- das Positionierungssystem einen Hebearm (20) aufweist, der an einem Grundträger (30) angeordnet ist,
- der Grundträger (30) an dem Fahrwagen (5) angeordnet ist,
- der Hebearm über eine Schwenkachse (A_{S}) relativ zum Grundträger (30) schwenkbar ist,
- der Grundträger (30) entlang einer Bewegungsachse (A_{B}) relativ zum Fahrwagen (5) bewegbar oder verfahrbar ist, wobei die Bewegungsachse (A_{B}) parallel zur Längsachse des Fahrwagens (5) verläuft, **dadurch gekennzeichnet, dass**
- dem Grundträger (30) ein erstes steuerbares Stellmittel zugeordnet ist, das angepasst ist den Grundträger (30) entlang der Bewegungsachse (A_{B}) relativ zum Fahrwagen (5) zu bewegen oder zu verfahren.

2. Kanalinspektions- und/oder Wartungssystem (1) nach Anspruch 1, wobei der Grundträger (30) um eine Drehachse (A_{D}) relativ zum Fahrwagen (5) drehbar ist.

3. Kanalinspektions- und/oder Wartungssystem (1) nach Anspruch 1 oder 2, wobei an dem freien Ende des Hebearms (20) eine Aufnahmeeinheit (21) angeordnet ist, zur Aufnahme, insbesondere lösbaren Aufnahme, des Gerätes (G).

4. Kanalinspektions- und/oder Wartungssystem (1) nach einem der vorhergehenden Ansprüche, wobei der Hebearm (20) mindestens zwei Hebearmabschnitte (20.1; 20.2) aufweist, die gelenkig, vorzugsweise über ein Drehgelenk, miteinander gekoppelt sind, und wobei das freie Ende eines der beiden Hebearmabschnitte (20.1; 20.2) auslenkbar oder schwenkbar an dem Grundträger (30) angeordnet ist.

5. Kanalinspektions- und/oder Wartungssystem (1) nach einem der vorhergehenden Ansprüche, wobei
- das erste steuerbare Stellmittel angepasst ist,
- den Hebearm über die Schwenkachse (A_{S}) relativ zum Grundträger (30) zu schwenken, und/oder
- den Grundträger (30) um die Drehachse (A_{D}) relativ zum Fahrwagen (5) zu drehen,
und/oder
- einem der beiden Hebearmabschnitte (20.1; 20.2) ein zweites steuerbares Stellmittel zugeordnet ist, das angepasst ist, den einen Hebearmabschnitt (20.1) relativ zu dem anderen Hebearmabschnitte (20.2) zu bewegen.

6. Kanalinspektions- und/oder Wartungssystem (1) nach dem vorhergehenden Anspruch, wobei dem ersten steuerbaren Stellmittel und/oder dem zweiten steuerbaren Stellmittel ein Absolutwertgeber zugeordnet ist.

7. Kanalinspektions- und/oder Wartungssystem (1) nach Anspruch 3, wobei die Aufnahmeeinheit (21) über einen vorbestimmten Winkelbereich (α), vorzugsweise über einen Winkelbereich von 180°, besonders bevorzugt über einen Winkelbereich von 270°, relativ zum Hebearm (20) schwenkbar ist.

8. Kanalinspektions- und/oder Wartungssystem (1) nach Anspruch 3, wobei die Aufnahmeeinheit (21)
- drehbar an dem freien Ende des Hebearms (20) angeordnet ist, und/oder
- zweiteilig ausgestaltet ist, wobei ein erster Teil der Aufnahmeeinheit relativ zum zweiten Teil der Aufnahmeeinheit drehbar ist.

9. Kanalinspektions- und/oder Wartungssystem (1) nach einem der vorhergehenden Ansprüche, wobei im Hebearm (20) ein druckdichter Kanal ausgebildet ist.

10. Kanalinspektions- und/oder Wartungssystem (1) nach dem vorhergehenden Anspruch, wobei der druckdichte Kanal von dem einen Ende bis an das andere Ende des Hebearms (20) als durchgängiger druckdichter Kanal ausgebildet ist, der fahrwagenseitig mit dem Fahrwagen (5) gekoppelt ist.

11. Kanalinspektions- und/oder Wartungssysteme (1) nach Anspruch 3, wobei zur Stabilisierung des Geräts
- das Gerät mittelbar über einen Gimbal an dem freien Ende des Hebearms anordenbar ist, und/oder
- das Positionierungssystem derart bewegbar ist, dass die Bewegungen des Positionierungssystems der Funktion eines Gimbals entsprechen.

## Claims

1. Sewer inspection and/or maintenance system (1) comprising a carriage (5) and a positioning system (10) for positioning devices (G) in a sewer (K), wherein
- the positioning system comprises a lifting arm (20) arranged on a base carrier (30),
- the base carrier (30) is arranged on the carriage (5),
- the lifting arm can be pivoted relative to the base carrier (30) via a pivot axis (A_{S} ),
- the base carrier (30) is movable or traversable relative to the carriage (5) along a movement axis (A_{B}), wherein the movement axis (A_{B}) runs parallel to the longitudinal axis of the carriage (5), and
- the base carrier (30) is assigned a first controllable actuating means which is adapted to move or traverse the base carrier (30) along the axis of movement (A_{B} ) relative to the carriage (5).

2. Sewer inspection and/or maintenance system (1) according to claim 1, wherein the base carrier (30) can be rotated about a rotation axis (A_{D} ) relative to the carriage (5).

3. Sewer inspection and/or maintenance system (1) according to claim 1 or 2, wherein a receiving unit (21) is arranged at the free end of the lifting arm (20) for receiving, in particular detachably receiving, the device (G).

4. Sewer inspection and/or maintenance system (1) according to one of the preceding claims, wherein the lifting arm (20) has at least two lifting arm sections (20.1; 20.2) which are connected to each other in an articulated manner, preferably via a pivot joint, and wherein the free end of one of the two lifting arm sections (20.1; 20.2) is arranged in a deflectable or pivotable manner on the base carrier (30).

5. Sewer inspection and/or maintenance system (1) according to one of the preceding claims, wherein
- the first controllable actuator is adapted
- to pivot the lifting arm relative to the base carrier (30) via the pivot axis (A_{S} ), and/or
- rotate the base carrier (30) about the axis of rotation (A_{D} ) relative to the carriage (5),
and/or
- one of the two lifting arm sections (20.1; 20.2) is assigned a second controllable actuating means which is adapted to move the one lifting arm section (20.1) relative to the other lifting arm section (20.2).

6. Sewer inspection and/or maintenance system (1) according to the preceding claim, wherein an absolute value encoder is assigned to the first controllable actuator and/or the second controllable actuator.

7. Sewer inspection and/or maintenance system (1) according to claim 3, wherein the recording unit (21) can be pivoted relative to the lifting arm (20) over a predetermined angle range (α), preferably over an angle range of 180°, particularly preferably over an angle range of 270°.

8. Sewer inspection and/or maintenance system (1) according to claim 3, wherein the mounting unit (21)
- is rotatably arranged at the free end of the lifting arm (20), and/or
- is designed in two parts, wherein a first part of the mounting unit is rotatable relative to the second part of the mounting unit.

9. Sewer inspection and/or maintenance system (1) according to one of the preceding claims, wherein a pressure-tight channel is formed in the lifting arm (20).

10. Sewer inspection and/or maintenance system (1) according to the preceding claim, wherein the pressure-tight channel is formed from one end to the other end of the lifting arm (20) as a continuous pressure-tight channel, which is coupled to the carriage (5) on the carriage side .

11. Sewer inspection and/or maintenance systems (1) according to claim 3, wherein, to stabilize the device
- the device can be arranged indirectly via a gimbal at the free end of the lifting arm, and/or
- the positioning system is movable in such a way that the movements of the positioning system correspond to the function of a gimbal.

## Revendications

1. Système d'inspection et/ou d'entretien de canalisations (1) comprenant un chariot (5) et un système de positionnement (10) pour positionner des appareils (G) dans une canalisation (K), dans lequel
- le système de positionnement comprend un bras de levage (20) qui est disposé sur un support de base (30),
- le support de base (30) est disposé sur le chariot (5),
- le bras de levage peut pivoter par rapport au support de base (30) via un axe de pivotement (A_{S} ),
- le support de base (30) est mobile ou déplaçable le long d'un axe de mouvement (A_{B} ) par rapport au chariot (5), l'axe de mouvement (A_{B}) s'étendant parallèlement à l'axe longitudinal du chariot (5), **caractérisé en ce que**
- un premier moyen de réglage commandable est associé au support de base (30), lequel est adapté pour déplacer ou faire coulisser le support de base (30) le long de l'axe de déplacement (A_{B}) par rapport au chariot (5).

2. Système d'inspection et/ou d'entretien de canalisations (1) selon la revendication 1, dans lequel le support de base (30) peut tourner autour d'un axe de rotation (A_{D} ) par rapport au chariot (5).

3. Système d'inspection et/ou d'entretien de canalisations (1) selon la revendication 1 ou 2, dans lequel une unité de réception (21) est disposée à l'extrémité libre du bras de levage (20) pour recevoir, en particulier de manière amovible, l'appareil (G).

4. Système d'inspection et/ou d'entretien de canalisations (1) selon l'une des revendications précédentes, dans lequel le bras de levage (20) comporte au moins deux sections de bras de levage articulées (20.1 ; 20.2) qui sont reliées entre elles de manière articulée, de préférence par l'intermédiaire d'une articulation pivotante, et dans lequel l'extrémité libre de l'une des deux sections de bras de levage (20.1 ; 20.2) est disposée de manière à pouvoir être déviée ou pivotée sur le support de base (30).

5. Système d'inspection et/ou d'entretien de canalisations (1) selon l'une des revendications précédentes, dans lequel
- le premier moyen de réglage commandable est adapté
- faire pivoter le bras de levage par rapport au support de base (30) via l'axe de pivotement (A_{S} ) et/ou
- faire tourner le support de base (30) autour de l'axe de rotation (A_{D} ) par rapport au chariot (5),
et/ou
- un deuxième moyen de réglage commandable est associé à l'une des deux sections de bras de levage (20.1 ; 20.2), lequel est adapté pour déplacer la section de bras de levage (20.1) par rapport à l'autre section de bras de levage (20.2).

6. Système d'inspection et/ou d'entretien de canalisations (1) selon la revendication précédente, dans lequel un capteur de valeur absolue est associé au premier moyen de réglage commandable et/ou au deuxième moyen de réglage commandable.

7. Système d'inspection et/ou d'entretien de canalisations (1) selon la revendication 3, dans lequ , l'unité de réception (21) peut pivoter sur une plage angulaire prédéterminée (α), de préférence sur une plage angulaire de 180°, de manière particulièrement préférée sur une plage angulaire de 270°, par rapport au bras de levage (20).

8. Système d'inspection et/ou d'entretien de canalisations (1) selon la revendication 3, dans lequel l'unité de réception (21)
- est disposée de manière rotative à l'extrémité libre du bras de levage (20), et/ou
- est conçue en deux parties, une première partie de l'unité de réception pouvant pivoter par rapport à la deuxième partie de l'unité de réception.

9. Système d'inspection et/ou d'entretien de canalisations (1) selon l'une des revendications précédentes, dans lequel un canal étanche à la pression est formé dans le bras de levage (20).

10. Système d'inspection et/ou d'entretien de canalisations (1) selon la revendication précédente, le canal étanche à la pression étant formé d'un bout à l'autre du bras de levage (20) sous la forme d'un canal étanche à la pression continu, qui est couplé au chariot (5) côté chariot avec .

11. Systèmes d'inspection et/ou d'entretien de canalisations (1) selon la revendication 3, dans lesquels, pour stabiliser l'appareil
- l'appareil peut être disposé indirectement via un cardan à l'extrémité libre du bras de levage, et/ou
- le système de positionnement est mobile de telle sorte que les mouvements du système de positionnement correspondent à la fonction d'un cardan.
